(19) Europäisches Patentamt
European Patent Office
Office européen des brevets

(11) EP 4 764 313 A2

(12) **EUROPEAN PATENT APPLICATION**

(43) Date of publication:
24.06.2026 Bulletin 2026/26

(21) Application number: 25216897.6

(22) Date of filing: 19.11.2025

(51) International Patent Classification (IPC):
F23R 3/20 (2006.01)          F23R 3/28 (2006.01)
F02K 3/10 (2006.01)

(52) Cooperative Patent Classification (CPC):
F23R 3/20; F02K 3/10; F23R 3/28

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 19.12.2024 GB 202418692

(71) Applicant: Rolls-Royce plc
London N1 9FX (GB)

(72) Inventors:
• Wilkinson, Andrew
Derby DE24 8BJ (GB)
• Romero, Eduardo
Derby DE24 8BJ (GB)

(74) Representative: Rolls-Royce plc
P.O. Box 31
IP Department (SinA-48)
Derby Derbyshire DE24 8BJ (GB)

(54) **FUEL INJECTOR FOR A GAS TURBINE ENGINE**

(57) A fuel injector for a combustor (15, 300) of a gas turbine engine (10) is described. The fuel injector comprises a fuel injection device (360) having a fuel injection port (362) configured to inject fuel into the combustor, wherein the fuel injection device is configured to inhibit cavitation of the fuel. Also disclosed is a combustor (15) for a gas turbine engine (10), a reheat assembly (300) for a gas turbine engine (10), a gas turbine engine (10), and an aircraft (200).

FIG. 3

EP 4 764 313 A2

## Description

## FIELD

This disclosure relates to a fuel injector for a combustor of a gas turbine engine. This disclosure further relates to: a combustor for a gas turbine engine, the combustor comprising such a fuel injector; a reheat assembly for a gas turbine engine, the reheat assembly comprising such a fuel injector; a gas turbine engine comprising such a fuel injector; and an aircraft comprising such a gas turbine engine.

## BACKGROUND

In addition to a main combustor, a gas turbine engine may comprise a reheat assembly for the purpose of providing increased thrust. A reheat assembly increases thrust by injecting fuel into a flow of air which has been exhausted from a core of the gas turbine engine. The fuel is dispersed within the flow of air and mixes with the flow of air to form a fuel-air mixture within the flow of air prior to being entrained into a wake of a flameholder. Within the wake of the flameholder, the fuel-air mixture is combusted in a flame. The heat released by the flame reheats the flow of air from the core of the gas turbine engine and provides additional thrust.

## SUMMARY

In a first aspect, there is provided a fuel injector for a combustor (e.g., a fuel injector for a reheat assembly or a main combustor) of a gas turbine engine, the fuel injector comprising: a fuel injection device having a fuel injection port configured to inject fuel into the combustor, wherein the fuel injection device is configured to promote cavitation of the fuel (e.g., promote cavitation of the fuel passing therethrough or injected thereby). This may improve the dispersion of the injected fuel within the airflow.

In an embodiment, the fuel injection port is configured to inject fuel into a combustion region of the combustor. In an embodiment, the fuel injection port is configured to inject fuel upstream of a combustion region of the combustor, such as into a core airflow (e.g., a reheat core section, such as upstream of a combustion region).

In an embodiment, the fuel injection device is configured to promote cavitation of the fuel upstream of the fuel injection port. In an embodiment, the fuel injection port comprises a first fuel injection port (e.g., an upstream-most port) of the fuel injection device.

In an embodiment, the fuel injection device comprises a flow restriction (e.g., a flow restriction upstream of the fuel injection port). In an embodiment, the flow restriction is configured to reduce a local static pressure of the fuel (e.g., reduce a local static pressure of the fuel below a vapour pressure of the fuel). In an embodiment, the flow restriction is configured to reduce a cross-sectional area of the fuel injection device (e.g., a cross-sectional area of an internal passageway of the fuel injection device) by at least 10%, such as at least 20%, such as at least 30%, such as at least 40%, such as at least 50%. This may promote cavitation.

In an embodiment, the fuel injection device is configured to promote cavitation upstream of the fuel injection port and to inhibit cavitation at the fuel injection port. In an embodiment, the fuel injection device (e.g., a conduit or an internal passageway thereof) comprises an internal profile having a first radius of curvature and the fuel injection port comprises an inlet profile having a second radius of curvature, the first radius of curvature being less than 10 times the second radius of curvature. This may inhibit cavitation at the location of the port. In an embodiment, the first radius of curvature is less than five times the second radius of curvature.

In an embodiment, the fuel injection port is configured to promote cavitation of the fuel (e.g., cavitation of the fuel passing therethrough or injected thereby). This may improve the dispersion of the injected fuel within the airflow. In an embodiment, the fuel injection device comprises an internal profile having a first radius of curvature and the fuel injection device comprises an inlet profile having a second radius of curvature, the first radius of curvature being at least 10 times greater than the second radius of curvature. This may promote cavitation at the location of the port. In an embodiment, the first radius of curvature is at least 20 times greater than the second radius of curvature.

In an embodiment, the fuel injection device is configured to promote cavitation of the fuel upstream of the fuel injection port and to promote cavitation of the fuel at the fuel injection port. This may improve the dispersion of the injected fuel within the airflow.

In an embodiment, the fuel injection device comprises a first fuel injection port and a second fuel injection port, the first and second fuel injection ports being configured to promote cavitation of the injected fuel. This may improve the dispersion of the injected fuel within the airflow.

In an embodiment, the fuel injection device comprises a first fuel injection port and a second fuel injection port, wherein the fuel injection device is configured to promote cavitation downstream of the first fuel injection port and upstream of the second fuel injection port (e.g., the first fuel injection port may be upstream relative to the second fuel injection port). In an embodiment, the fuel injection device is configured to promote cavitation between adjacent fuel injection ports. In an embodiment, the fuel injection device comprises a flow restriction between adjacent fuel injection ports.

In an embodiment, the fuel injection device comprises a spray bar (e.g., a spray bar for a reheat assembly of a gas turbine engine). In an embodiment, the spray bar comprises at least five, such as between five and 20, fuel injection ports. In an embodiment, the fuel injection device comprises a swirler (e.g., a swirler for a main combustor of a gas turbine engine). In an embodiment, the fuel injector comprises a plurality of fuel injection devices (e.g., a plurality of spray bars).

In an embodiment, the fuel injection port comprises an elongate aperture (e.g., an elongate aperture in a wall or surface of the fuel injection device). In an embodiment, a major dimension of the aperture is greater than (e.g., at least 50% greater than) a minor dimension of the aperture. In an embodiment, a major dimension of the aperture is at least twice (e.g., approximately twice) a minor dimension of the aperture. In an embodiment, a major dimension of the aperture is at least three times a minor dimension of the aperture, such as at least five times a minor dimension of the aperture.

In an embodiment, the fuel injection device comprises a longitudinal direction (e.g., the fuel injection device comprises a conduit having a longitudinal direction or axis), the aperture being elongate in parallel with the longitudinal direction of the fuel injection device. In an embodiment, the aperture is elongate in a direction perpendicular to a direction of core airflow of the combustor. In an embodiment, a minor dimension of the aperture extends in parallel with a direction of core airflow of the combustor. In an embodiment, the aperture is elongate in a radial direction of the combustor (e.g., a radial direction of the reheat assembly). In an embodiment, the minor dimension of the aperture extends in an axial direction of the combustor (e.g., an axial direction of the reheat assembly). In an embodiment, the fuel injection device comprises a spray bar extending radially relative to a central axis of the combustor (e.g., a central axis of the reheat assembly).

In an embodiment, the first fuel injection port is configured to inject (e.g., discharge) fuel in a direction perpendicular to a core airflow direction of the combustor (e.g., in a tangential direction of the reheat assembly). In an embodiment, the second fuel injection port is configured to inject (e.g., discharge) fuel in a direction perpendicular to a core airflow direction of the combustor (e.g., a tangential direction of the reheat assembly). In an embodiment, the first fuel injection port is configured to inject (e.g., discharge) fuel in a tangential direction of the combustor (e.g., a tangential direction of the reheat assembly). In an embodiment, the second fuel injection port is configured to inject (e.g., discharge) fuel in a tangential direction of the combustor (e.g., a tangential direction of the reheat assembly). The tangential direction may be mutually perpendicular to the radial and axial dimensions of the reheat assembly, the combustor, or the gas turbine engine.

In an embodiment, the fuel injector comprises a low-pressure fuel injector.

In an embodiment, promoting cavitation may comprise reducing, at a location, a local static pressure of the fuel below a vapour pressure of the fuel. In an embodiment, promoting cavitation may comprise increasing, at a location, a likelihood of cavitation (e.g., causing cavitation) by reducing a cavitation number of the fuel at the location, such as below a cavitation threshold.

The first aspect may form part of, or be combined with, one or more of the other aspects.

In a second aspect, there is provided a fuel injector for a combustor (e.g., a fuel injector for a reheat assembly or a main combustor) of a gas turbine engine, the fuel injector comprising: a fuel injection device having a fuel injection port configured to inject fuel into the combustor, wherein the fuel injection device is configured to inhibit cavitation of the fuel (e.g., inhibit cavitation of the fuel passing therethrough or injected thereby).

In an embodiment, the fuel injection port is configured to inject fuel into a combustion region of the combustor. In an embodiment, the fuel injection port is configured to inject fuel upstream of a combustion region of the combustor, such as into a core airflow (e.g., a reheat core section upstream of a combustion region).

In an embodiment, the fuel injection port is configured to inhibit cavitation of the fuel. In an embodiment, the fuel injection port comprises a first fuel injection port (e.g., an upstream-most port) of the fuel injection device. In an embodiment, the fuel injection device (e.g., an internal passageway thereof) comprises an internal profile having a first radius of curvature and the fuel injection port comprises an inlet profile having a second radius of curvature, the first radius of curvature being less than 10 times the second radius of curvature. This may inhibit cavitation at the location of the port. In an embodiment, the first radius of curvature is less than five times the second radius of curvature.

In an embodiment, the fuel injection device (e.g., an internal passageway thereof) is configured to inhibit cavitation of the fuel. In an embodiment, the fuel injection device is configured to inhibit cavitation of the fuel upstream of the fuel injection port. In an embodiment, the fuel injection device comprises a flow restriction (e.g., a flow restriction upstream of the fuel injection port). In an embodiment, the flow restriction is configured to maintain a local static pressure of the fuel above a vapour pressure of the fuel. In an embodiment, the flow restriction may be configured to reduce a local static pressure of the fuel no lower than a vapour pressure of the fuel.

In an embodiment, the flow restriction is configured to reduce a cross-sectional area of the fuel injection device (e.g., a cross-sectional area of an internal passageway of the fuel injection device) by no more than 50%, such as no more than 40%, such as no more than 30%, such as no more than 20%, such as no more than 10%. This may inhibit cavitation.

In an embodiment, the fuel injection port is a first fuel injection port (e.g., an upstream-most port) and the fuel injection device comprises a second fuel injection port. In an embodiment, the first and second fuel injection ports are configured to inhibit cavitation of the fuel. In an embodiment, the second fuel injection port comprises an inlet profile with a radius of curvature less than 10 times, such as less than five times, the radius of curvature of an internal passageway of the fuel injection device. This may inhibit cavitation of the fuel passing through the port.

In an embodiment, the fuel injection device comprises a flow restriction downstream of first fuel injection port and upstream of the second fuel injection port. In an embodiment, the flow restriction is configured to maintain a local static pressure of the fuel above a vapour pressure of the fuel. In an embodiment, the flow restriction may be configured to reduce a local static pressure of the fuel no lower than a vapour pressure of the fuel. In an embodiment, the flow restriction reduces a cross-sectional area of the fuel injection device between the first and second fuel injection ports by no more than 50%, such as no more than 40%, such as no more than 30%, such as no more than 20%, such as no more than 10%. This may inhibit cavitation.

In an embodiment, the fuel injection device comprises a first fuel injection port and a second fuel injection port, the first and second fuel injection ports being configured to promote cavitation of the injected fuel. In an embodiment, the fuel injection device may be configured to inhibit cavitation upstream of the fuel injection ports and optionally between adjacent fuel injection ports, while the fuel injection ports may be configured to promote cavitation.

In an embodiment, the fuel injection device comprises a first fuel injection port and a second fuel injection port, wherein the fuel injection device is configured to promote cavitation downstream of the first fuel injection port and upstream of the second fuel injection port (e.g., the first fuel injection port may be upstream relative to the second fuel injection port). In an embodiment, the fuel injection device (e.g., an internal passageway thereof) is configured to promote cavitation between adjacent fuel injection ports.

In an embodiment, the fuel injection device comprises a spray bar (e.g., a spray bar for a reheat assembly of a gas turbine engine). In an embodiment, the spray bar comprises at least five, such as between five and 20, fuel injection ports. In an embodiment, the fuel injection device comprises a swirler (e.g., a swirler for a main combustor of a gas turbine engine). In an embodiment, the fuel injector comprises a plurality of fuel injection devices (e.g., a plurality of spray bars).

In an embodiment, the fuel injection port comprises an elongate aperture (e.g., an elongate aperture in a wall or surface of the fuel injection device). In an embodiment, a major dimension of the aperture is greater than (e.g., at least 50% greater than) a minor dimension of the aperture. In an embodiment, a major dimension of the aperture is at least twice (e.g., approximately twice) a minor dimension of the aperture. In an embodiment, a major dimension of the aperture is at least three times a minor dimension of the aperture, such as at least five times a minor dimension of the aperture.

In an embodiment, the fuel injection device comprises a longitudinal direction (e.g., the fuel injection device comprises a conduit having a longitudinal direction or axis), the aperture being elongate in parallel with the longitudinal direction of the fuel injection device. In an embodiment, the aperture is elongate in a direction perpendicular to a direction of core airflow of the combustor. In an embodiment, a minor dimension of the aperture extends in parallel with a direction of core airflow of the combustor. In an embodiment, the aperture is elongate in a radial direction of the combustor (e.g., a radial direction of the reheat assembly). In an embodiment, the minor dimension of the aperture extends in an axial direction of the combustor (e.g., an axial direction of the reheat assembly). In an embodiment, the fuel injection device comprises a spray bar extending radially relative to a central axis of the combustor (e.g., a central axis of the reheat assembly and/or a rotational axis of the gas turbine engine).

In an embodiment, the first fuel injection port is configured to inject (e.g., discharge) fuel in a direction perpendicular to a core airflow direction of the combustor (e.g., in a tangential direction of the reheat assembly). In an embodiment, the second fuel injection port is configured to inject (e.g., discharge) fuel in a direction perpendicular to a core airflow direction of the combustor (e.g., a tangential direction of the reheat assembly). In an embodiment, the first fuel injection port is configured to inject (e.g., discharge) fuel in a tangential direction of the combustor (e.g., a tangential direction of the reheat assembly). In an embodiment, the second fuel injection port is configured to inject (e.g., discharge) fuel in a tangential direction of the combustor (e.g., a tangential direction of the reheat assembly). The tangential direction may be mutually perpendicular to the radial and axial dimensions of the reheat assembly, the combustor, or the gas turbine engine.

In an embodiment, the fuel injector comprises a low-pressure fuel injector.

In an embodiment, inhibiting cavitation may comprise maintaining, at a location, a local static pressure of the fuel above a vapour pressure of the fuel. In an embodiment, inhibiting cavitation may comprise reducing, at a location, a likelihood of cavitation (e.g., preventing cavitation) by increasing a cavitation number of the fuel at the location (e,g., maintaining a cavitation number above a cavitation threshold).

The second aspect may form part of, or be combined with, one or more of the other aspects.

In a third aspect, there is provided a fuel injector for a combustor (e.g., a fuel injector for a reheat assembly or a main combustor) of a gas turbine engine, the fuel injector comprising a fuel injection device having a fuel injection port configured to inject fuel into the combustor, wherein the fuel injection port comprises an elongate aperture (e.g., an elongate aperture in a wall or surface of the fuel injection device.

In an embodiment, the fuel injection port is configured to inject fuel into a combustion region of the combustor. In an embodiment, the fuel injection port is configured to inject fuel upstream of a combustion region of the combustor, such as into a core airflow (e.g., a reheat core section, such as upstream of a combustion region).

In an embodiment, a major dimension of the aperture is greater than (e.g., at least 50% greater than) a minor dimension of the aperture. In an embodiment, a major dimension of the aperture is at least twice (e.g., approximately twice) a minor dimension of the aperture. In an embodiment, a major dimension of the aperture is at least three times, such as at least five times, a minor dimension of the aperture.

In an embodiment, the aperture is substantially rectangular. In an embodiment, the aperture is substantially elliptic or racetrack-shaped.

In an embodiment, the fuel injection device comprises a first fuel injection port having an elongate aperture and a second fuel injection port having an elongate aperture.

In an embodiment, the aperture of the first fuel injection port and the aperture of the second fuel injection port are elongate in parallel directions.

In an embodiment, the aperture of the first fuel injection port and the aperture of the second fuel injection port are elongate in the same direction.

In an embodiment, the first fuel injection port and the second fuel injection port are configured to inject (e.g., discharge) fuel in parallel directions.

In an embodiment, the fuel injection device comprises a spray bar (e.g., a spray bar for a reheat assembly of a gas turbine engine). In an embodiment, the spray bar comprises at least five, such as between five and 20, fuel injection ports. In an embodiment, the spray bar extends in a radial direction of the combustor. In an embodiment, the fuel injection device comprises a swirler (e.g., a swirler for a main combustor of a gas turbine engine). In an embodiment, the fuel injector comprises a plurality of fuel injection devices (e.g., a plurality of spray bars).

In an embodiment, the fuel injection device (e.g., the spray bar) comprises a longitudinal direction (e.g., the fuel injection device comprises a conduit having a longitudinal direction or axis), the or each aperture being elongate in parallel with the longitudinal direction of the fuel injection pipe.

In an embodiment, the or each aperture comprises a minor dimension extending perpendicular to (e.g., transverse to) a longitudinal direction of the fuel injection device (e.g., the fuel injection device comprises a conduit having a longitudinal direction or axis).

In an embodiment, the aperture is elongate in a direction perpendicular to a direction of core airflow of the combustor (e.g., perpendicular to a rotational axis of the gas turbine engine). In an embodiment, a minor dimension of the aperture extends in parallel with a direction of core airflow of the combustor (e.g., in parallel with a rotational axis of the gas turbine engine). In an embodiment, the aperture is elongate in a radial direction of the combustor (e.g., a radial direction of the reheat assembly). In an embodiment, the minor dimension of the aperture extends in an axial direction of the combustor (e.g., an axial direction of the reheat assembly and/or a rotational axis of the gas turbine engine). In an embodiment, the fuel injection device comprises a spray bar extending radially relative to a central axis of the combustor (e.g., a central axis of the reheat assembly).

In an embodiment, the first fuel injection port is configured to inject (e.g., discharge) fuel in a direction perpendicular to a core airflow direction of the combustor (e.g., in a tangential direction of the reheat assembly). In an embodiment, the second fuel injection port is configured to inject (e.g., discharge) fuel in a direction perpendicular to a core airflow direction of the combustor (e.g., a tangential direction of the reheat assembly). In an embodiment, the first fuel injection port is configured to inject (e.g., discharge) fuel in a tangential direction of the combustor (e.g., a tangential direction of the reheat assembly). In an embodiment, the second fuel injection port is configured to inject (e.g., discharge) fuel in a tangential direction of the combustor (e.g., a tangential direction of the reheat assembly). The tangential direction may be mutually perpendicular to the radial and axial dimensions of the reheat assembly, the combustor, or the gas turbine engine. The tangential direction may be perpendicular to a primary gas flow or core airflow direction of the reheat assembly, the combustor, or the gas turbine engine.

In an embodiment, the fuel injector comprises a low-pressure fuel injector.

The third aspect may form part of, or be combined with, one or more of the other aspects.

In a fourth aspect, there is provided a combustor (e.g., a reheat assembly or a main combustor) for a gas turbine engine, the combustor comprising a fuel injector according to one or more of the first to third aspects. In an embodiment, the combustor comprises one or more of the fuel injector of the first aspect, the fuel injector of the second aspect, or the fuel injector of the third aspect.

In an embodiment, the fuel injection device comprises a spray bar (e.g., a spray bar for a reheat assembly of a gas turbine engine). In an embodiment, the spray bar extends in a radial direction of the combustor (e.g., a radial direction of the reheat assembly). In an embodiment, the fuel injection device comprises a swirler (e.g., a swirler for a main combustor of a gas turbine engine). In an embodiment, the fuel injector comprises a plurality of fuel injection devices (e.g., a plurality of spray bars).

In an embodiment, the aperture is elongate in a direction perpendicular to a direction of core airflow of the combustor (e.g., perpendicular to a rotational axis of the gas turbine engine). In an embodiment, a minor dimension of the aperture extends in parallel with a direction of core airflow of the combustor (e.g., in parallel with a rotational axis of the gas turbine engine). In an embodiment, the aperture is elongate in a radial direction of the combustor (e.g., a radial direction of the reheat assembly). In an embodiment, the minor dimension of the aperture extends in an axial direction of the combustor (e.g., an axial direction of the reheat assembly and/or a rotational axis of the gas turbine engine). In an embodiment, the fuel injection device comprises a spray bar extending radially relative to a central axis of the combustor (e.g., a central axis of the reheat assembly).

The fourth aspect may form part of, or be combined with, one or more of the other aspects.

In a fifth aspect, there is provided a reheat assembly for a gas turbine engine, the reheat assembly comprising one or more of (e.g., any one of, any two of, any three of, or all of): the fuel injector of the first aspect; the fuel injector of the second aspect; the fuel injector of the third aspect; or the combustor of the fourth aspect.

In an embodiment, the fuel injection device comprises a spray bar extending radially relative to a central axis of the reheat assembly (e.g., relative to an axial direction of the gas turbine engine). In an embodiment, the fuel injector comprises a plurality of spray bars extending radially relative to a central axis of the reheat assembly. In an embodiment, the spray bars are angularly distributed about an axial direction of the reheat assembly.

In an embodiment, the fuel injection port comprises an elongate aperture, the aperture being elongate (e.g., having major dimension) along a direction perpendicular to a direction of core airflow of the reheat assembly. In an embodiment, the fuel injection port comprises an elongate aperture, the aperture being elongate in a radial direction of the reheat assembly.

In an embodiment, the fuel injection port comprises an elongate aperture, the aperture having a minor dimension extending in parallel with a direction of core airflow of the reheat assembly. In an embodiment, the fuel injection port comprises an elongate aperture, the aperture having a minor dimension extending in parallel with an axial direction of the reheat assembly.

In an embodiment, the fuel injection device comprises a longitudinal direction (e.g., the fuel injection device comprises a conduit having a longitudinal direction or axis), the aperture being elongate in parallel with the longitudinal direction of the fuel injection device. In an embodiment, the first fuel injection port is configured to inject (e.g., discharge) fuel in a tangential direction of the reheat assembly. In an embodiment, the second fuel injection port is configured to inject (e.g., discharge) fuel in a tangential direction of the reheat assembly. The tangential direction may be mutually perpendicular to the radial and axial dimensions of the reheat assembly, the combustor, or the gas turbine engine

The fifth aspect may form part of, or be combined with, one or more of the other aspects.

In a sixth aspect, there is provided a gas turbine engine comprising one or more of (e.g., any one of, any two of, any three of, any four of, or all of): the fuel injector of the first aspect, the fuel injector of the second aspect, the fuel injector of the third aspect, the combustor of the fourth aspect; or the reheat assembly of the fifth aspect.

The sixth aspect may form part of, or be combined with, one or more of the other aspects

In a seventh aspect, there is provided an aircraft comprising one or more of (e.g., any one of, any two of, any three of, any four of, any five of, or all of): the fuel injector of the first aspect, the fuel injector of the second aspect, the fuel injector of the third aspect, the combustor of the fourth aspect, the reheat assembly of the fifth aspect, or the gas turbine engine of the sixth aspect.

The seventh aspect may form part of, or be combined with, one or more of the other aspects.

**BRIEF DESCRIPTION OF THE DRAWINGS**

Embodiments will now be described by way of example only with reference to the accompanying drawings, in which:

FIG. 1 is a simplified top view of an aircraft comprising an airframe and a propulsion machine;
FIG. 2 is a sectional side view of a gas turbine engine;
FIG. 3 is a sectional side view of an example reheat assembly;
FIG. 4 is a sectional front view of the reheat assembly of FIG. 3;
FIG. 5 is a sectional front view of an example portion of a spray bar;
FIG. 6 is a sectional front view of an example portion of a spray bar;
FIG. 7 is a side view of an example portion of a spray bar; and
FIG. 8 is a sectional front view of an example portion of a spray bar.

**DETAILED DESCRIPTION**

*Aircraft*

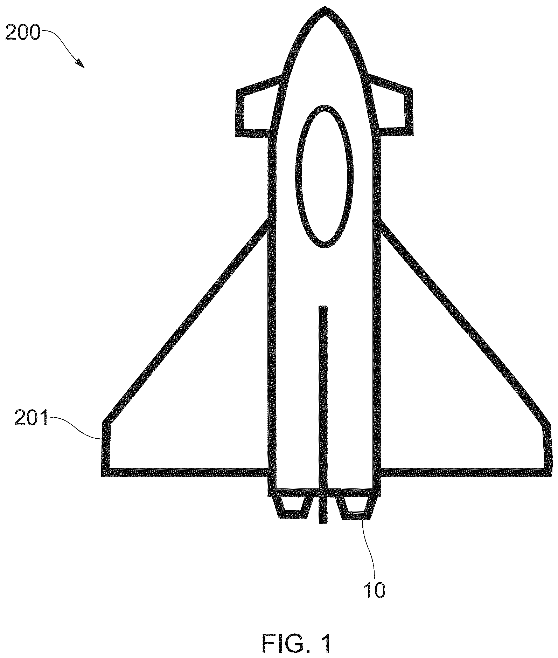

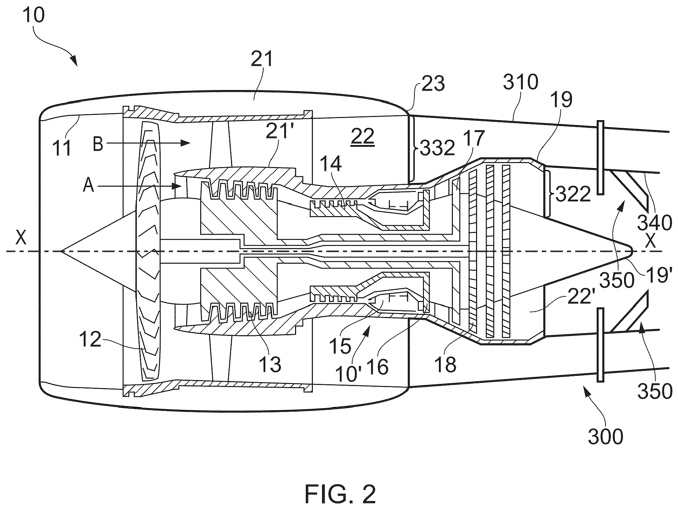

FIG. 1 shows a simplified and schematic view of an aircraft 200 comprising an airframe 201 and a gas turbine engine 10. The gas turbine engine 10 may be in accordance with the gas turbine engine 10 described below with reference to FIG. 2.

*Gas turbine engine*

FIG. 2 shows a ducted fan gas turbine engine 10 having a principal and rotational axis X-X. The engine 10 generally comprises an air intake 11, a propulsive fan 12, and an engine core 10'. The engine core 10' comprises, in axial flow series, an intermediate pressure compressor 13, a high-pressure compressor 14, a main combustor 15, a high-pressure turbine 16, an intermediate pressure turbine 17, and a low-pressure turbine 18. An outer casing 21 generally surrounds the engine 10 and defines the intake 11, a bypass duct 22 and a bypass duct outlet 23. An inner casing 21' defines a core duct 22', in which the engine core 10' is disposed, and further defines a core duct outlet 19.

During operation, air entering the intake 11 is accelerated by the fan 12 to produce two air flows: a core flow of air A into the engine core 10' and a bypass flow of air B which passes through the bypass duct 22 to provide propulsive thrust. The intermediate pressure compressor 13 compresses the core flow of air A directed into it before delivering that air to the high pressure compressor 14 where further compression takes place.

The compressed air exhausted from the high-pressure compressor 14 is directed into the main combustor 15 where it is mixed with fuel and the mixture combusted. The resultant hot combustion products then expand through, and thereby drive, the high, intermediate and low-pressure turbines 16, 17, 18 before being exhausted through the core duct outlet 19 to provide additional propulsive thrust. The resultant hot combustion products are exhausted through the core duct outlet 19. The high, intermediate and low-pressure turbines respectively drive the high and intermediate pressure compressors 14, 13 and the fan 12 by suitable interconnecting shafts.

### Reheat assembly

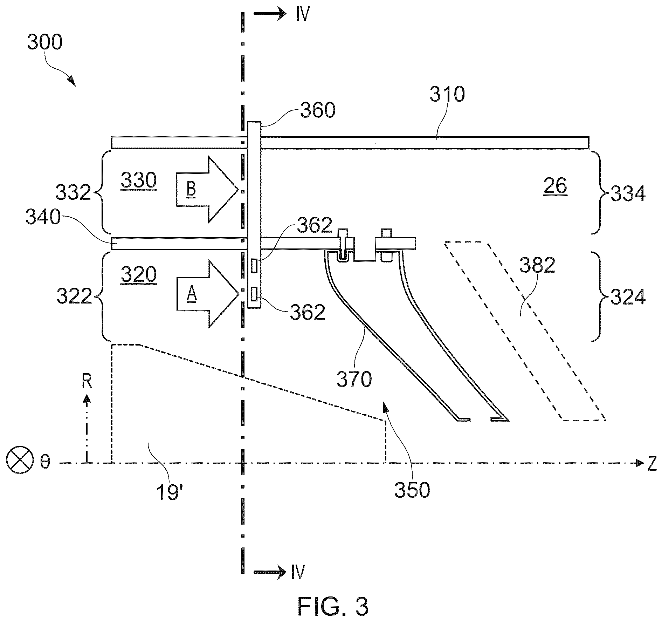

The gas turbine engine 10 further comprises a reheat assembly 300. FIG. 3 shows a sectional side view of the reheat assembly 300. The reheat assembly 300 is generally configured to inject fuel into the core airflow A downstream of the low-pressure turbine 18 and optionally to inject fuel into the bypass airflow B for the purpose of combustion therein, causing the core airflow A or the bypass airflow B to be reheated, thereby providing additional propulsive thrust.

The reheat assembly 300 generally comprises a jetpipe casing 310 and a support duct 340. The support duct 340 extends axially from an upstream end of the jetpipe casing 310 (i.e., an end closest to the air intake 11), at least partially through the jetpipe casing 310 in a direction towards a downstream end of the jetpipe casing 310 (i.e., an end furthest from the air intake 11). The jetpipe casing 310 comprises a reheat core section 320 configured to duct the core airflow A from a reheat core inlet 322 to a reheat core outlet 324, and a reheat bypass section 330 configured to duct the bypass airflow B from a reheat bypass inlet 332 to a reheat bypass outlet 334. The reheat bypass section 330 is annular and disposed radially outwardly of the reheat core section 320 such that the reheat bypass inlet 332 is disposed radially outwardly of the reheat core inlet 322. The reheat bypass outlet 334 is also disposed radially outwardly of the reheat core outlet 324. The support duct 340 generally radially separates the reheat core section 320 and the reheat bypass section 330. The support duct 340 at least partially separates the reheat bypass section 330 from the reheat core section 320 at the upstream end of the jetpipe casing 310.

The jetpipe casing 310 defines an afterburning region in the downstream end of the jetpipe casing 310 in which a core airflow A, from the reheat core section 320, and a bypass airflow B, from the reheat bypass section 330, are able to mix and in which fuel discharged or injected into the air streams may be ignited to provide additional thrust.

The jetpipe casing 310 of the reheat assembly 300 is radially aligned with, and attached to the outer casing 21 such that the reheat bypass inlet 332 of the reheat assembly 300 is aligned with the bypass duct outlet 23. The support duct 340 of the reheat assembly 300 is radially aligned with, and attached to the inner casing 21' such that the reheat core inlet 322 of the reheat assembly 300 is aligned with the core duct outlet 19.

Accordingly, the core duct 22' of the gas turbine engine 10 is configured to convey the core airflow A through the engine core 10' to the reheat core inlet 322, while the bypass duct 22 of the gas turbine engine 10 is configured to convey the bypass airflow B through the gas turbine engine 10 to the reheat bypass inlet 332 without passing through the engine core 10'.

The reheat assembly 300 has an axial direction Z, a radial direction R and an angular direction θ. As FIG. 3 is a sectional side view of the reheat assembly 300, the angular direction θ is defined through the plane of the page, while the axial direction Z and the radial direction R are defined according to the direction of the corresponding coordinate arrows provided by FIG. 3. The reheat assembly 300 is configured such that, when the reheat assembly 300 is incorporated into a gas turbine engine 10, the axial direction Z of the reheat assembly 300 aligns with a principal and rotational axis of the gas turbine engine. The jetpipe casing 310 defines the axial direction Z, the radial direction R and the angular direction θ of the reheat assembly 300.

The reheat assembly 300 comprises a plurality of reheat arrangements 350 configured to enable the ignition of, and promote the stable formation of, a flame within the reheat assembly 300. Each reheat arrangement 350 may be structurally similar (e.g., identical). Each reheat arrangement 350 comprises a radially extending spray bar 360 and a radially extending flameholder 370. The spray bar 360 and the flameholder 370 are each radially extending in that they extend along a direction having a component which is parallel to the radial direction R of the reheat assembly 300. The spray bar 360 and the flameholder 370 are each mounted to the support duct 340, with at least the spray bar 360 being mounted to the jetpipe casing 310 (e.g., by one or more welds or fasteners).

The radially extending flameholder 370 of each reheat arrangement 350 is configured to instigate and to maintain a relatively low-speed eddy within the core airflow A to form a wake-stabilised region 382 located downstream of the flameholder 370. Ignition and reheating of the exhaust gases occurs in the wake-stabilised region 382.

The spray bar 360 of each reheat arrangement 350 is located upstream of the flameholder 370 and comprises a set of fuel injection ports 362. Each spray bar 360 is configured to convey fuel from a radially outer end (e.g., which may be in fluid communication with other components of a fuel injection system outside the jetpipe 310) towards a radially inner end comprising the fuel injection ports 362. Each fuel injection port 362 is configured to discharge or inject fuel into the reheat core section 320 and thus into the core airflow A. In the illustrated example, the set of fuel injection ports 362 of the spray bar 360 are located in the same angular plane defined by the axial direction Z and the radial direction R as the flameholder 370, such that the set of fuel injection ports 362 are substantially angularly aligned with the flameholder 370 upstream of the flow wake-stabilised region 382. Although FIG. 3 shows a plurality of fuel injection ports 362, in some examples there may be only a single fuel injection port 362 in each spray bar 360. Similarly, although FIG. 3 shows fuel injection ports 362 in the reheat core section 320 only, in some examples there may be additional or alternative fuel injection ports 362 provided in the reheat bypass section 330.

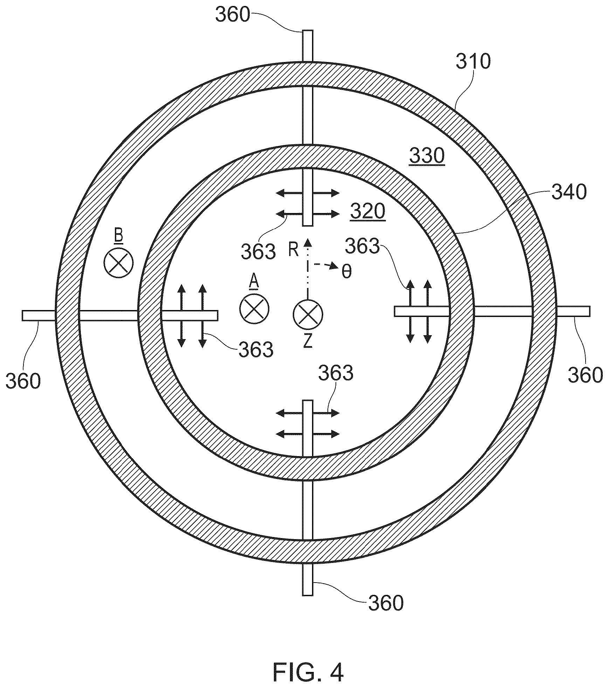

FIG. 4 shows a sectional front view of the first example reheat assembly 300 as seen through section IV-IV indicated on FIG. 3. The co-ordinate axes R, Z, θ are included at the centre of the drawing, while the air flows A, B are shown extending into the page. For simplicity, the exhaust cone 19', the flameholders 370 and other downstream components are omitted.

As shown by FIG. 4, the plurality of spray bars 360 are angularly distributed (e.g., equiangularly distributed) around the jetpipe casing 310 and are structurally identical. In other words, the plurality of reheat arrangements 350 are offset with respect to one another around the angular direction θ of the reheat assembly 300. Although FIG.4 shows a total of four spray bars 360 offset with respect to one another around the angular direction θ of the reheat assembly 300, it will be appreciated that there may be any suitable number of spray bars 360, offset with respect to one another around the angular direction θ of the reheat assembly 300 in this way. In this example, and as shown by FIG. 4, the reheat assembly 300 has a substantially circular cross-section in the plane defined by the radial direction R and the angular direction θ. However, in other examples, the reheat assembly 300 may have an alternatively shaped cross-section in the plane defined by the radial direction R and the angular direction θ (e.g., an elliptical cross-section). It will be appreciated that only one of the plurality of spray bars 360 shown by FIG. 4 is visible in FIG. 3.

As shown in FIG. 3, the fuel injection ports 362 are provided on a circumferentially-facing aspect of the spray bar 360 such that the fuel injection ports 362 are configured to inject fuel tangentially into the reheat core section 320 in a direction normal to the primary air flow A. In other words, the fuel injection ports 362 are configured to inject fuel into/out of the plane of the page of FIG. 3.

Although the fuel injection ports are not visible in the sectional view of FIG. 4, arrows 363 indicating the tangential directions of the injected fuel are included. Accordingly, each spray bar 360 may comprise fuel injection ports 362 on either circumferentially-facing aspect, such that each spray bar 360 may be configured to inject fuel into the primary air flow A in opposing tangential directions which are normal to the direction of air flow A.

As such, fuel is sprayed across the direction of primary air flow, improving the dispersion of the injected fuel which improves mixing with the air flow and thus combustion within the reheat assembly 300.

### Spray bar portion 560

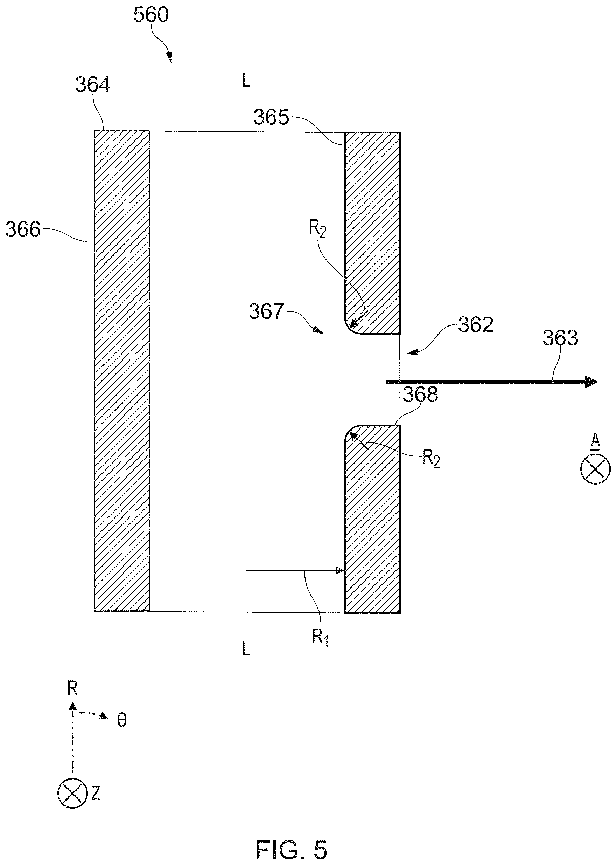

FIG. 5 shows a longitudinal section in the R-θ plane through a portion 560 of the spray bar 360, such as the uppermost spray bar 360 of FIG. 4. The portion 560 is generally configured to convey fuel within a fuel injection system and inject the fuel into the core airflow A of the reheat core section 320.

Portion 560 comprises a conduit 364 having a substantially cylindrical geometry and defining a longitudinal axis L-L extending in parallel with the radial direction R of the reheat assembly 300. The conduit 364 comprises walls 366 defining a substantially cylindrical internal passageway 365 of radius $R_1$ and configured to convey fuel from a radially outer end towards a radially inner end (e.g., from top to bottom of FIG. 5).

Part way along the conduit 364, a fuel injection port 362 is provided. The fuel injection port 362 comprises an aperture 368 in the walls 366, the aperture 368 providing fluid communication between the internal passageway 365 and the exterior of the conduit 364, such that fuel conveyed by passageway 365 may be discharged through the aperture 368 and thereby injected into the airflow A of the reheat assembly 300. As indicated by the arrow 363, the fuel injection port 362 is configured to inject fuel into the airflow A perpendicular to or across the primary direction of the airflow A (the airflow A being parallel with the axial direction Z of the reheat assembly 300). In other words, the fuel injection port 362 is configured (e.g., oriented within the spray bar 360) to inject fuel into the airflow A in a tangential direction of the reheat assembly 300.

The aperture 368 comprises an inlet profile 367 having a radius of curvature $R_2$ defined by the adjacent walls 366. As shown in FIG. 5, the radius of curvature $R_2$ is smaller than the radius of curvature $R_1$, meaning that the inlet profile 367 of the fuel injection port 362 is sharper than the radius of curvature $R_1$ of the internal passageway 365.

By selecting the ratio between the radii of curvature $R_1$, $R_2$, the fuel injection port 362 can be configured to either promote or inhibit cavitation within the fuel discharged though the port 362. For example, the greater the ratio between the radius of curvature $R_1$ and the radius of curvature $R_2$, the greater the likelihood of cavitation occurring in the fuel as it passes through the inlet profile 367 of the fuel injection port 362. Conversely, the smaller the ratio (e.g., the closer to 1:1), the lower the likelihood of cavitation occurring in the fuel as it passes through the inlet profile 367.

The present inventors have determined that a ratio of less than 10:1 ($R_1$:$R_2$, corresponding to a smoother inlet profile 367) is likely to inhibit cavitation, while a ratio of at least 10:1 ($R_1$:$R_2$, corresponding to a more sudden inlet profile 367) is likely to promote cavitation. In some examples the present inventors have determined that a ratio of less than 5:1 may prevent cavitation at the fuel injection port, while a ratio of at least 20:1 may cause cavitation.

Cavitation is considered to be the formation of fuel vapour bubbles within the liquid fuel, caused by a locally reduced static liquid pressure. The locally reduced pressure may itself be caused by a sudden change in flow direction, an acceleration of the flow, or the presence of surface roughness within a fuel conduit.

Depending on the circumstances of operation (e.g., the extent to which afterburning is required and the parameters of the airflows A, B), the promotion or inhibition of cavitation may improve the dispersion of fuel injected into the airflow A (and optionally B) and thus improve the combustion of the fuel within the reheat assembly 300. For example, the required degree of dispersion and the required location of the break-up of the fuel discharged via ports 362 may vary depending on the number of spray bars 360 and the angular spacing therebetween (e.g., as illustrated in FIG. 4).

By promoting cavitation, break-up of the discharged fuel may occur sooner after injection into the core airflow A (e.g., closer to the port 362). For example, the presence of fuel vapour bubbles within the liquid fuel may reduce the cohesion within the injected fuel.

Conversely, by inhibiting cavitation, dispersion of the discharged fuel may occur further from the fuel injection port 362, potentially allowing the fuel to be injected a greater tangential distance by each port 362 and thus spray bar 360.

Without wishing to be bound by theory, the prediction of cavitation is dependent on the geometry of the passageway 365 and the geometry of the aperture 368, as well as the density of the fuel and the flow velocity of the fuel within the passageway 365. Accordingly, while the above ratios were found to be relevant to the geometries of a specific experimental set-up, the exact parameters promoting (e.g., causing) or inhibiting (e.g., preventing) cavitation may be dependent upon specific configurations of a fuel injection system.

The pressure gradient parallel to the radius of curvature $R_2$ within the inlet profile 367 may be characterised by the following:

$$\frac{dp}{dr} \propto \rho \, \frac{v^2}{R_2}$$

where $\rho$ is the density of the fuel, v is the velocity of the fuel, and $R_2$ is the radius of curvature of the inlet profile 367. Accordingly, the pressure gradient within the inlet profile 367 may be inversely proportional to the radius $R_2$, and so a smaller radius may reduce the static pressure of the turning fuel more rapidly than is demanded by the overall acceleration of the flow through the aperture due to the dimensions of the aperture alone.

While the passageway 365 is described as being cylindrical, it will be understood that alternative geometries of the passageway 365 may be used. For example, if the passageway 365 is elliptical in cross-section, the radius $R_1$ may refer to a minimum radius of curvature of the passageway 365.

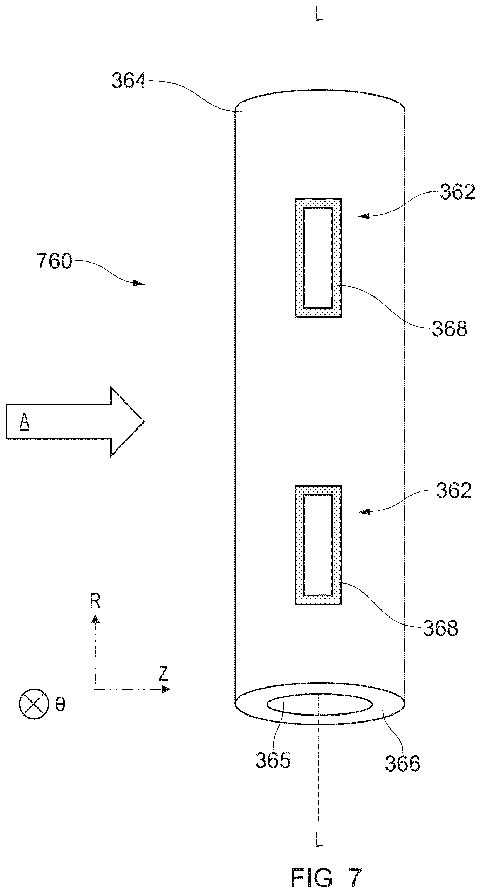

Similarly, the dimensions (e.g., relative to the internal passageway 365) and overall geometry of the aperture 368 may be selected in order to promote or inhibit cavitation. This is further described in relation to FIG. 7.

Although FIG. 5 shows a single port 362 on one aspect of the spray bar 360, it will be understood that further ports 362 may be provided upstream, downstream and/or adjacent the illustrated port 362, such as on an opposing aspect. For example, the portion 560 may additionally comprise a port 362 provided on an opposing aspect of the conduit 364, such that the conduit 364 may be symmetric about the long axis L-L and thereby inject fuel in opposing tangential directions as illustrated by arrows 363 of FIG. 4.

### Spray bar portion 660

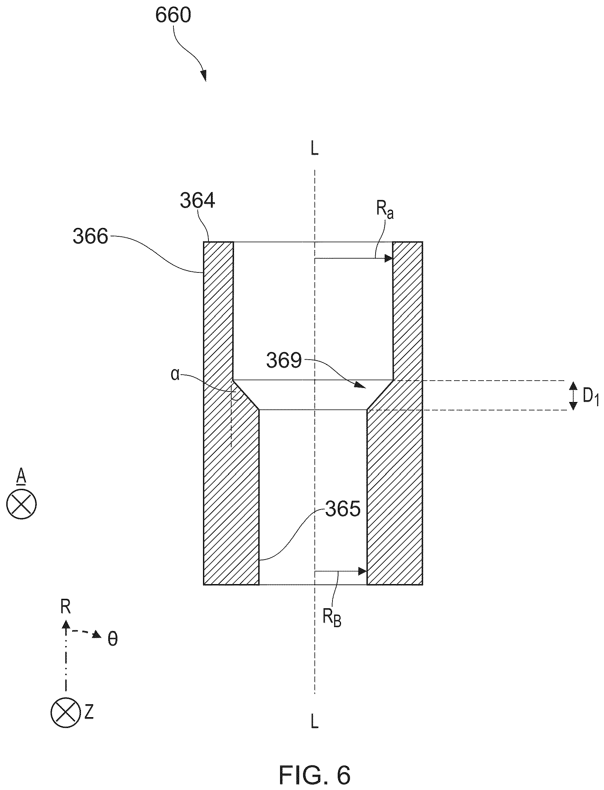

FIG. 6 shows a longitudinal section in the R-θ plane through a portion 660 of the spray bar 360, in the same orientation as FIG. 5. The portion 660 shown in FIG. 6 may be upstream or downstream of the portion of spray bar 360 shown in FIG. 5.

In the same manner as the portion 560 of FIG. 5, the portion 660 comprises a conduit 364 having a substantially circular transverse section and defining a longitudinal axis L-L extending in parallel with the radial direction R of the reheat assembly 300. The conduit 364 comprises walls 366 defining an internal passageway 365 configured to convey fuel from a radially outer end towards a radially inner end (e.g., from top to bottom of FIG. 6).

However, unlike the portion 560 of FIG. 5, the portion 660 in FIG. 6 comprises an internal passageway 365 of non-uniform radius along its length. In particular, the portion 660 of passageway 365 comprises an internal radius $R_A$ at an upper end and a radius $R_B$ at a lower end, the change in internal radius being provided by a flow restriction 369.

The flow restriction 369 comprises a throat of frustoconical geometry having longitudinal dimension $D_1$ and walls 366 of angle $\alpha$ to the long axis L-L, during which the passageway 365 transitions internal radius from $R_A$ to $R_B$.

By selecting the ratio between the internal radii $R_A$, $R_B$, the longitudinal dimension $D_1$ and the angle $\alpha$, the flow restriction 369 can be configured to either promote or inhibit cavitation within the fuel conveyed along internal passageway 365. For example, the likelihood of cavitation occurring in the fuel as it passes through the flow restriction 369 may be increased by increasing the ratio between the radii $R_A$ and $R_B$, decreasing the distance $D_1$ and increasing the angle $\alpha$. A more sudden flow restriction 369 will lead to an acceleration of the flow downstream of the flow restriction 369, reducing a local static pressure within the fuel (e.g., to below a vapour pressure of the fuel), thus increasing the likelihood of cavitation. Conversely, the smaller the ratio between $R_A$ and $R_B$ (e.g., the closer to 1:1), the lower the likelihood of cavitation occurring in the fuel as it passes through the flow restriction 369.

The present inventors have determined that a reduction in cross-sectional area of the internal passageway 365 by the flow restriction 369 of at least 30% is likely to cause cavitation.

Without wishing to be bound by theory, the prediction of cavitation is dependent on the geometry of the passageway 365 and the geometry of the aperture 368, as well as the density of the fuel and the flow velocity of the fuel within the passageway 365. Accordingly, while the above ratios were found to be relevant to the geometries of a specific experimental set-up, the exact parameters promoting (e.g., causing) or inhibiting (e.g., preventing) cavitation may be dependent upon specific configurations of a fuel injection system.

As described in relation to FIG. 5, the promotion or inhibition of cavitation may improve the dispersion of fuel injected into the airflow A and thus the combustion of the fuel within the reheat assembly 300, dependent upon the circumstances of operation of the reheat assembly. By promoting cavitation, break-up of the discharged fuel may occur sooner after injection into the core airflow A. For example, the presence of fuel vapour bubbles within the liquid fuel may reduce the cohesion within the injected fuel. Conversely, by inhibiting cavitation, dispersion of the discharged fuel may occur further from the fuel injection port 362, potentially allowing the fuel to be injected a greater tangential distance by each port 362 and thus spray bar 360.

While FIG. 6 has been described in relation to a passageway 365 transitioning from a first circular transverse section to a second circular transverse section via a frustoconical flow restriction 369, some examples include alternative transverse section geometries (e.g., elliptical) and flow restriction geometries.

Similarly, while the promotion of cavitation has been described in relation to a flow restriction, it will be understood that additional or alternative features may promote cavitation, such as surface roughness features within the internal passageway 365 of the conduit 364 which may act as cavitation nucleation sites.

### Spray bar portion 760

FIG. 7 shows a side view of a portion 760 of spray bar 360. In a similar manner to portions 560, 660, the portion 760 comprises a conduit 364 having a substantially cylindrical geometry and defining an internal passageway 365 configured to convey fuel from a radially outer end towards a radially inner end (e.g., from top to bottom of FIG. 7). However, unlike FIGS. 5 and 6, FIG. 7 shows the portion 760 viewed from the circumferential or $\theta$ direction.

The portion 760 of spray bar 360 comprises fuel injection ports 362 configured to discharge fuel from within the internal passageway 365 to the exterior of the spray bar 360 and thus inject fuel into the core airflow A within the reheat core section 320.

As shown in FIG. 7, each of the fuel injection ports 362 comprises an elongate aperture 368 formed in the walls 366 of the conduit 364. In particular, each aperture 368 comprises a substantially rectangular geometry, the long axis of the aperture extending in parallel with the longitudinal axis L-L of the spray bar 360.

The illustrated fuel injection ports 362 are identical in their orientation, dimensions and geometry, but different in coordinates along the longitudinal axis L-L of the spray bar 360 (and thus different in radial coordinates relative to the reheat assembly 300). The fuel injection ports 362 are thus provided such that they are aligned with one another, having collinear long axes.

In the example of FIG. 7, in which the spray bar 360 is provided radially within the reheat assembly 300, the long axis of the apertures 368 is also parallel with the radial direction of the reheat assembly 300. By providing the ports 362 in this orientation, the long axis of each aperture 368 is perpendicular to the core airflow A (which is itself parallel to the Z-axis of the reheat assembly 300). The apertures 368 may equally be considered to have their short axes in parallel with the core airflow A, and/or their short axes in parallel with the Z-axis of the reheat assembly 300.

The fuel injection ports 362 inject fuel out of the plane of the page of FIG. 7, the injected fuel then being entrained by the core airflow A and thus flowing downstream within the reheat core section 320 towards the wake stabilised region 382.

By providing the long axis of each aperture 368 perpendicular to the core airflow A and the short axis of each aperture 368 in parallel with the core airflow A, the fuel injection ports 362 provide a wide (in the radial direction of the reheat assembly 300) but thin (in the axial direction of the reheat assembly 300) injection of fuel, which may be more readily dispersed and mixed within the core airflow A than injection ports having an equiaxed geometry (e.g., circular fuel injection ports), or indeed elongate apertures having their elongate dimensions in a different orientation. The illustrated elongate fuel injection ports 362 may thereby improve mixing of the injected fuel with the air flow, and thus improve combustion, within reheat assembly 300. Additionally, the present inventors have determined that a fuel injection port 362 having an elongate aperture extending in parallel with the long axis L-L of the conduit 364 may promote cavitation of the fuel upon entering the fuel injection port. By promoting cavitation of the fuel, break-up of the discharged fuel may be further enhanced and thereby occur sooner after injection into the core airflow A (e.g., closer to the port 362). For example, the presence of fuel vapour bubbles within the liquid fuel may reduce the cohesion within the injected fuel.

In examples where the spray bar 360 is provided in alternative orientations relative to the core airflow A (e.g., orientations not having long axis L-L in parallel with radial direction R of the reheat assembly 300), the long axis of each aperture 368 may remain perpendicular to the core airflow A and/or the short axis of each aperture may remain in parallel with the core airflow A. The above advantageous dispersion of the injected fuel may thereby still be achieved.

When compared with spray bars having ports of equiaxed geometry, the cross-sectional areas of the apertures 368 may be equal to the cross sectional area of the equiaxed ports in order to maintain overall fuel injection rates and other parameters.

In an example not shown, the elongate apertures 368 may be provided in an orientation having their elongate direction perpendicular to the long axis L-L. When the spray bar 360 is provided radially relative to the reheat assembly 300, the long axis of each aperture 368 is in parallel with the core airflow A and the short axis of each aperture 368 is perpendicular to the core airflow A, meaning that the fuel injection ports 362 in this orientation provide a thin (in the radial direction of the reheat assembly 300) but long (in the axial direction of the reheat assembly 300) injection of fuel, which may be less readily dispersed and mixed within the core airflow A than injection ports having an equiaxed geometry (e.g., circular fuel injection ports), or indeed elongate apertures having their elongate dimensions in a different orientation. This may increase an injection distance prior to break-up of the fuel jet.

Additionally, the present inventors have determined that a fuel injection port 362 having an elongate aperture extending perpendicular to the long axis L-L of the conduit 364 may inhibit cavitation of the fuel entering the fuel injection port. By inhibiting cavitation, dispersion of the discharged fuel may occur further from the fuel injection port 362, potentially allowing the fuel to be injected a greater tangential distance by each port 362 and thus spray bar 360.

Although not shown, the portion 760 may additionally comprise fuel injection ports 362 on an opposing aspect of the spray bar 360, the opposing fuel injection ports 362 being configured to inject fuel in the tangential direction into the page. This is indicated by the opposing arrows 363 on either side of the spray bars 360 in FIG. 4. Similarly, although not shown, adjacent fuel injection ports 362 may be spaced apart by at least five times a longitudinal dimension of the apertures 368.

As will be described later, each aperture 368 may comprise an inlet profile 367 configured to promote or inhibit cavitation as described in relation to portion 560.

While the portions 560, 660, 760 have so far been described independently in relation to FIGS. 5-7 respectively, it will be understood that, in addition to being provided in a spray bar 360 individually, any two or three of the portions 560, 660, 760 may be combined within the spray bar 360. Similarly, any of portions 560, 660, 760 may comprise another of portions 560, 660, 760.

### Spray bar portion 860

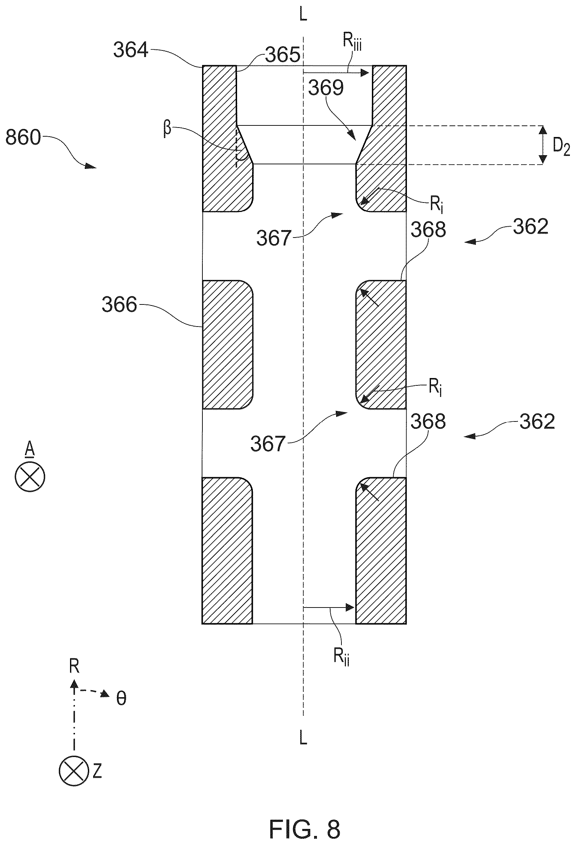

FIG. 8 shows a longitudinal section in the R-$\theta$ plane through a portion 860 of the spray bar 360, the portion 860 comprising each of portions 560, 660 760. In a similar manner to the portions 560, 660, 760, portion 860 comprises a conduit 364 having a substantially cylindrical geometry and defining an internal passageway 365 configured to convey fuel from a radially outer end towards a radially inner end (e.g., from top to bottom of FIG. 8).

The portion 860 of spray bar 360 comprises fuel injection ports 362 configured to discharge fuel from within the internal passageway 365 to the exterior of the spray bar 360 and thus inject fuel into the core airflow A within the reheat core section 320. Although their minor dimensions are not visible in FIG. 8, each of fuel injection ports 362 comprises an elongate aperture 368 formed in the walls 366 of the conduit 364, each elongate aperture 368 having a minor dimension extending into the page in parallel with the core airflow A, and a major dimension extending up and down the page in parallel with the R direction of the reheat assembly 300. The portion 860 thus comprises the portion 760.

In addition, the inlet profile 367 of each aperture 368 comprises a radius of curvature $R_i$ defined by the adjacent walls 366. As shown in FIG. 8, the radius of curvature $R_i$ is smaller than the radius of curvature $R_{ii}$ of the passageway 365 of the conduit 364 at the location of the ports 362, meaning that the inlet profile 367 of the fuel injection port 362 is sharper than the radius of curvature $R_{ii}$ of the internal passageway 365.

The radius of curvature $R_i$ can be selected in relation to the radius of curvature $R_{ii}$ in order to promote or inhibit the likelihood of cavitation being instituted at the inlet to the fuel injection port 362. The portion 860 may thus be considered to comprise the portion 560 collocated or coterminously with the portion 760.

Further, the portion 860 comprises flow restriction 369 according to portion 660. The flow restriction 369 comprises a frustoconical throat having longitudinal dimension $D_2$ and walls 366 of angle $\beta$ to the long axis L-L, during which the passageway 365 transitions internal radius from $R_{iii}$ to $R_{ii}$. By selecting the ratio between the internal radii $R_{iii}$, $R_{ii}$, the longitudinal dimension $D_2$

and the angle β, the flow restriction 369 can be configured to either promote or inhibit cavitation within the fuel conveyed along internal passageway 365.

Although not shown, the portion 860 may additionally comprise a flow restriction between fuel injection ports 362 (e.g., downstream of a first port 362 and upstream of a second port 362).

Accordingly, a spray bar 360 may be configured to: promote cavitation; inhibit cavitation; or both promote and inhibit cavitation at different points along its length. As such, at least the following additional examples are envisaged.

A flow restriction 369 may be configured to promote cavitation upstream of a fuel injection port 362 which itself may be configured to promote cavitation. Alternatively, a flow restriction 369 may be configured to promote cavitation upstream of a fuel injection port 362 which itself may be configured to inhibit cavitation. Either of these fuel injection ports 362 may comprise an elongate aperture 368 as described in relation to portion 760.

Further, a flow restriction 369 may be configured to inhibit cavitation upstream of a fuel injection port 362 which itself may be configured to promote cavitation. Alternatively, a flow restriction 369 may be configured to inhibit cavitation upstream of a fuel injection port 362 which itself may be configured to inhibit cavitation. Either of these fuel injection ports 362 may comprise an elongate aperture 368 as described in relation to portion 760.

The above flow restrictions 369 may be provided downstream of a further fuel injection port 362 (e.g., between adjacent fuel injection ports 362), the further fuel injection port being configured to promote or inhibit cavitation.

While the spray bar 360 has been described in relation to multiple fuel injection ports 362 of the same geometry, it will be understood that a spray bar 360 may comprise fuel injection ports 362 of different geometries, dimensions and/or orientations. For example, a spray bar 360 may comprise any of (e.g., at least two of): a first fuel injection port having an aperture being elongate in parallel with the spray bar long axis L-L; a second fuel injection port having an aperture being elongate perpendicular to the spray bar long axis L-L; or a third fuel injection port having an aperture with an equiaxed geometry.

Similarly, a reheat assembly 300 may comprise a fuel injector comprising a plurality of spray bars 360, each spray bar optionally having a different configuration of fuel injection ports 362.

### *Main combustor*

Although the inlet profiles 367, elongate apertures 368 and flow restrictions 369 have been described in relation to a fuel injection port 362 of a spray bar 360 of a reheat assembly 300, it will be understood that the features of the present invention may equally be applied to other fuel injection devices. In some examples, a swirler or a filming atomiser of a fuel injector for the main combustor 15 of a gas turbine engine 10 may comprise any combination of the portions 560-860. For example, a swirler may comprise elongate apertures 368 (according to portion 760) which may comprise an inlet profiles 367 (according to portion 560) configured to promote or inhibit cavitation. Further, an internal passageway of the swirler may comprise a flow restriction 369 (according to portion 660) which may be configured to promote or inhibit cavitation.

### *Other*

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

### Claims

1. A fuel injector for a combustor of a gas turbine engine, the fuel injector comprising:

   a fuel injection device having a fuel injection port configured to inject fuel into the combustor, the fuel injection device comprises an internal profile having a first radius of curvature and the fuel injection port comprises an inlet profile having a second radius of curvature, the first radius of curvature being less than 10 times the second radius of curvature, wherein the fuel injection device is configured to inhibit cavitation of the fuel.

2. The fuel injector of claim 1, wherein the fuel injection device comprises a flow restriction configured to maintain a local static pressure of the fuel above a vapour pressure of the fuel.

3. The fuel injector of any preceding claim, wherein the fuel injection device comprises a flow restriction, the flow restriction reducing a cross-sectional area of the fuel injection device by no greater than 30%.

4. The fuel injector of any preceding claim, wherein the fuel injection device comprises a flow restriction upstream of the fuel injection port, the flow restriction being configured to maintain a local static pressure of the fuel above a vapour pressure of the fuel.

5. The fuel injector of any preceding claim, wherein the fuel injection port is configured to inhibit cavitation of the fuel.

6.  The fuel injector of any preceding claim, wherein the fuel injection port is a first fuel injection port and the fuel injection device further comprises a second fuel injection port, the second fuel injection port being configured to inhibit cavitation of the fuel.

7.  The fuel injector of any preceding claim, wherein the fuel injection port is a first fuel injection port and fuel injection device comprises a second fuel injection port, wherein the fuel injection device comprises a flow restriction downstream of first fuel injection port and upstream of the second fuel injection port, the flow restriction being configured to maintain a local static pressure of the fuel above a vapour pressure of the fuel.

8.  The fuel injector of claim 7, wherein, between the first and second fuel injection ports, the flow restriction reduces a cross-sectional area of the fuel injection device by no greater than 30%.

9.  The fuel injector of any preceding claim, wherein the fuel injection device comprises a fuel injection port having an elongate aperture.

10. The fuel injector of any preceding claim, wherein the fuel injection device comprises a spray bar.

11. A combustor for a gas turbine engine, the combustor comprising the fuel injector of any preceding claim.

12. A reheat assembly for a gas turbine engine, the reheat assembly comprising the fuel injector of any of claims 1 to 10, or the combustor of claim 11.

13. The reheat assembly of claim 12, wherein the fuel injection device comprises a spray bar extending radially relative to a central axis of the reheat assembly.

FIG. 1

FIG. 2

FIG. 3

FIG. 4

FIG. 5

FIG. 6

FIG. 7

FIG. 8